Europäisches Patentamt

European Patent Office

Office européen des brevets

(19)

(11) Numéro de publication: **0 245 131 B1**

(12) **FASCICULE DE BREVET EUROPEEN**

(45) Date de publication du fascicule du brevet: **30.01.91**

(51) Int. Cl.⁵: **G 05 G 5/18, B 60 N 2/02**

(21) Numéro de dépôt: **87400748.7**

(22) Date de dépôt: **03.04.87**

(54) **Dispositif de commande du déplacement pas à pas d'un organe et notamment du dossier d'un siège de véhicule.**

(30) Priorité: **09.04.86 FR 8605069**

(43) Date de publication de la demande:
**11.11.87 Bulletin 87/46**

(45) Mention de la délivrance du brevet:
**30.01.91 Bulletin 91/05**

(84) Etats contractants désignés:
**AT BE CH DE ES FR GB IT LI LU NL SE**

(56) Documents cités:
**FR-A-2 121 280**
**FR-A-2 186 904**
**US-A-3 044 830**

(73) Titulaire: **ECIA - EQUIPEMENTS ET COMPOSANTS POUR L'INDUSTRIE AUTOMOBILE**
**F-25400 Audincourt (Doubs) (FR)**

(72) Inventeur: **Bianchi, François**
**20, Combe Saint-Germain**
**F-25700 Valentigney (FR)**
Inventeur: **Busa, Denis**
**13, rue de Franche Comté**
**F-25400 Audincourt (FR)**
Inventeur: **Fourrey, François**
**32, rue du Petit Chênois**
**F-25200 Montbeliard (FR)**

(74) Mandataire: **Polus, Camille et al**
**c/o Cabinet Lavoix 2, Place d'Estienne d'Orves**
**F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne un dispositif de commande du déplacement pas à pas d'un organe qui est tout particulièrement, bien que non exclusivement, adapté à être monté sur un siège de véhicule automobile, par exemple pour le réglage de l'inclinaison du dossier de ce siège.

Duns la plupart des sièges de véhicule automobile actuellement utilisés, le dispositif de réglage de l'inclinaison du dossier est monté sur l'articulation qui relie ce dossier à l'assise du siège. Ce dispositif est commandé au moyen d'un bouton ou d'un levier, qui par suite est également placé au voisinage de cette articulation. De telles dispositions obligent le constructeur à prévoir à l'avance quelle sera la position du siège dans le véhicule et surtout à disposer de plusieurs types de sièges selon que le dossier doit être réglable ou non.

Pour remédier à ce dernier inconvénient, on a maintenant proposé de réaliser des sièges d'automobiles dont l'armature du dossier est prolongée au-delà de son articulation sur l'assise, ce qui permet de relier le dispositif de commande à ce prolongement. Il est toutefois nécessaire que ce dispositif de commande présente un encombrement réduit et soit facile à adapter sur le support du siège.

La présente invention a pour but de répondre à ces exigences en fournissant un dispositif de commande du déplacement pas à pas d'un organe tout particulièrement adapté à la forme des supports de sièges de véhicule automobile.

Cette invention à en effet pour objet un dispositif de commande qui comporte un boîtier solidaire d'un organe fixe et traversé en son centre par un organe de commande qui est solidaire en rotation seulement d'un pignon en prise avec une crémaillère reliée à l'organe à déplacer, et, à l'intérieur du boîtier, un verrou articulé muni à une extrémité d'une denture de coopération avec la crémaillère et à son autre extrémité d'un genou de blocage dans le boîtier, ce verrou étant repoussé en position reliée de déverrouillage par un déplacement axial de l'organe de commande, mais étant rappelé élastiquement en position verrouillée dès le retour de cet organe de commande à sa position de repos.

Le dispositif forme ainsi un organe compacte, et on peut comprendre qu'il est facile à manoeuvrer puisque le verrouillage et le déverrouillage sont obtenus par un simple déplacement axial du bouton poussoir de commande.

Selon un mode préféré de réalisation le verrou est constitué par deux étriers montés autour de l'organe de commande et en appui pivotant l'un sur l'autre, par deux faces incurvées complémentaires.

De préférence, l'un des étriers du verrou porte deux ergots en saillie vers l'intérieur qui coopèrent avec un épaulement extérieur de l'organe de commande pour provoquer le basculement de verrou.

La description ci-dessous d'un mode de réalisation, donné à titre d'exemple non limitatif et représenté aux dessins annexés, fera d'ailleurs ressortir les avantages et caractéristiques de l'invention.

Sur les dessins:

la Fig. 1 est une vue de cô5é d'un dispositif de commande selon l'invention;

la Fig. 2 est une vue en coupe selon la ligne II—II de la Fig. 1, montrant le dispositif en position de verrouillage;

la Fig. 3 est une vue analogue à la Fig. 2 montrant le dispositif déverrouillé;

la Fig. 4 est une vue en coupe selon la ligne IV—IV de la Fig. 1;

la Fig. 5 est une vue en perspective à plus grande échelle du verrou du dispositif de l'invention;

la Fig. 6 est une vue en coupe suivant la ligne VI—VI de la Fig. 1.

la Fig. 7 est une vue analogue à la Fig. 2 d'une variante de réalisation, en coupe suivant la ligne 7—7 de la Fig. 8;

la Fig. 8 est une vue en coupe suivant la ligne 8—8 de la Fig. 7;

la Fig. 9, 10 et 11 sont des vues schématiques en coupe suivant la ligne 9—9 de la Fig. 8, montrant les positions successives de verrou articulé.

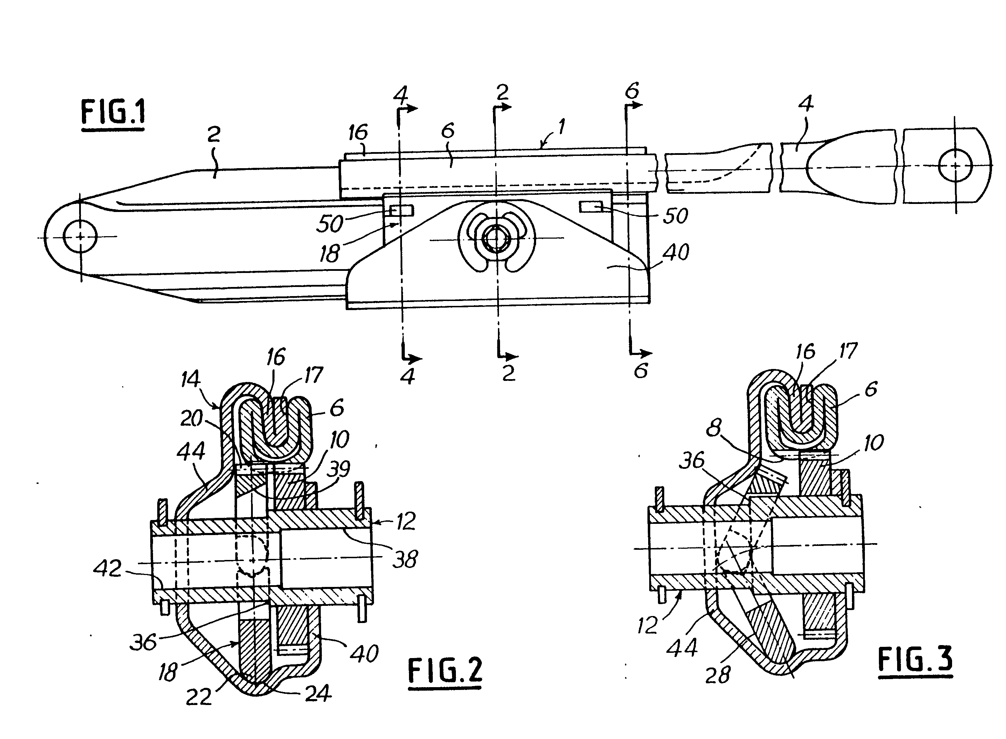

Comme le montre la Fig. 1 le dispositif de commande selon l'invention, 1, est relié d'un côté à un organe fixe, et de l'autre à l'organe à déplacer par l'intermédiaire d'un flasque 2 et d'une tige 4. Lorsque ce dispositif est monté sur un siège de véhicule pour commander l'inclinaison de son dossier, le flasque 2 est fixé sur la structure de support du siège tandus que la tige 4 est articulée à l'extrémité inférieure de l'armature du dossier ou inversement.

Dans le mode de réalisation représenté la tige 4 est formée par un tube qui dans le dispositif de commande 1 comporte une partie 6 déformée pour présenter une section en U à double paroi (Fig. 2 et 3). La face inférieure de la base de ce U, 6, porte une denture rectiligne ou crémaillère 8 qui est en prise avec un pignon denté 10 solidaire en rotation seulement d'une tige de commande 12.

Cette tige de commande 12 est solidaire à l'une de ses extrémités d'un bouton poussoir ou analogue (non représenté) qui permet son entraînement manuel. Elle traverse en outre librement les deux parois opposées d'un boîtier 14 qui contient le pignon 10. Dans le mode de réalisation représenté, le boîtier 14 est formé par une tôle repliée ayant une section sensiblement en forme de C et comporte à sa partie supérieure un rebord vertical 16 qui s'emboîte dans la rainure longitudinale 17 du U de la barre 6 et constitue ainsi un rail de guidage pour le déplacement de cette barre.

A l'intérieur du boîtier 14 est également monté un verrou articulé 18 dont une extrémité porte une denture 20 qui en position verrouillée est en prise avec la crémaillère 8 tandis que son autre extrémité est formée par une surface convexe semi-cylindrique 22 qui est reçue dans une gorge 24 de forme complémentaire du boîtier 14. La denture 20 et la surface cylindrique 22 sont en fait les extrémités opposées de deux pièces 26 et 28 en forme d'étrier, montées en sens inverse et susceptibles de pivoter l'une sur l'autre, les faces en regard 30 et 32 de leurs branches étant incurvées de manière complémentaire. Dans le mode de réalisation représenté la surface inférieure 30 des branches de l'étrier supérieur 26 a une forme convexe tandis que la surface correspondante 32 de l'étrier inférieur 28 à une forme semi-cylindrique concave. Par ailleurs, l'étrier supérieur 26 porte intérieurement deux ergots cylindriques 34 qui sont latéralement en contact avec un épaulement extérieur 36 de la tige de commande 12. Par contre, l'écartement entre les branches des étriers 26 et 28 est tel que ces branches ménagent entre elles un espace 37 nettement plus grand que la partie 38 de plus grand diamètre de la tige de commande 12. Cet espace 37 est d'ailleurs évasé à sa parti supérieure, la paroi interne 39 de l'étrier 26 étant inclinée vers le haut en direction du pignon 10.

Le pignon 10 est monté sur la partie 38 de grand diamètre de la tige 12 et est immobilisé axialement contre la paroi plane extérieure 40 du boîtier 14. Le verrou 18 est au contraire monté autour de la portion 42 de petit diamètre de la tige 12 entre le pignon 10 et un bossage 44 en saillie vers l'extérieur du boîtier 14.

Lorsque le dispositif est verrouillé, les deux étriers 26 et 28 sont dans le prolongement l'un de l'autre, de sorte que la surface cylindrique 22 et la denture 20 sont bloquées l'une dans la gorge 24 du boîtier 14 et l'autre en prise avec la crémaillère 8, ce qui interdit tout déplacement de cette crémaillère.

Si l'on veut modifier la position de l'organe à déplacer, par exemple l'inclinaison du dossier du siège d'un véhicule, il suffit d'exercer une pression sur le bouton poussoir relié à la tige de commande 12 de façon à déplacer celle-ci axialement de la position de verrouillage représentée sur la Fig. 2 à la position de déverrouillage représentée sur la Fig. 3. Au cours de ce déplacement, l'épaulement 36 de la tige 12 repousse les ergots 34 vers le fond du bossage en provoquant le basculement l'un par rapport à l'autre des étriers 26 et 28. La denture 20 quitte alors la crémaillère 8 tandis que la surface cylindrique 22 pivote dans la gorge de blocage 24. La paroi 39 vient presque en appui sur la tige de commande 12 et les saillies 34 butent contre le fond du bossage 44. La crémaillère 8 est alors libérée, et la tige 12 peut être entraînée en rotation, ce qui fait tourner le pignon 10 et déplace axialement la crémaillère 8.

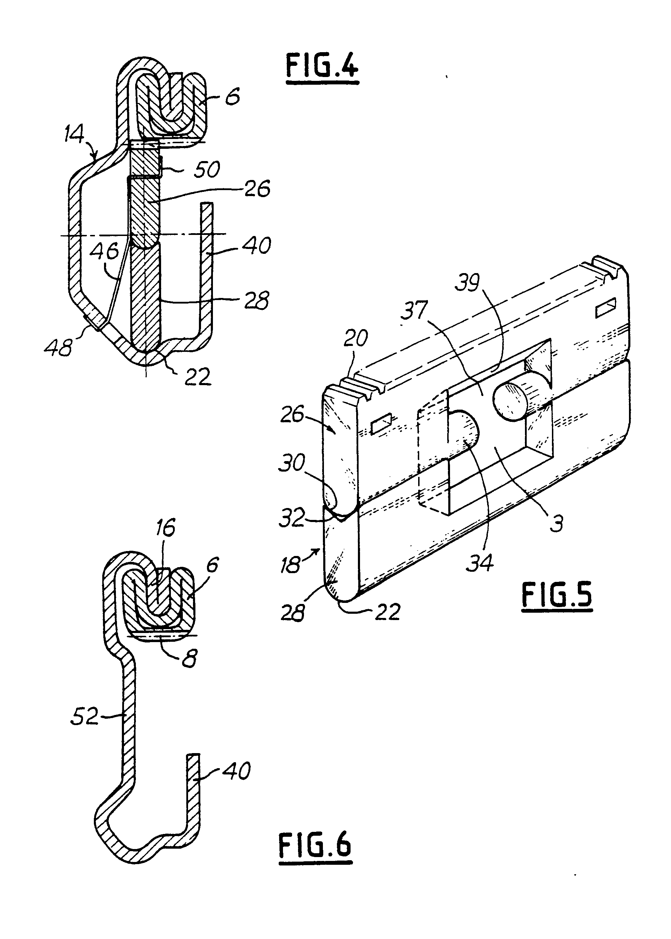

Dès que la pression cesse sur la tige de commande 12, un ressort 46 rappelle le verrou 18 dans la position de blocage. Ce ressort 46 (Fig. 4) est par exemple constitué par une lame métallique fixée à l'une de ses extrémité 48 sur le boîtier 14 et traversant au voisinage de sa partie supérieure la branche latérale de l'étrier supérieure 26 pour être fixée sur la face opposée de cet étrier en 50. De préférence, un ressort 46 est monté dans chacune des branches de l'étrier 26, c'est à dire à chacune des extrémités du verrou 18.

De préférence, comme le monte la Fig. 6 le bossage 44 a une longueur sensiblement égale à celle du verrou 28 et la paroi du boîtier 14 est enfoncée vers l'intérieur à chacune des extrémités de ce bossage en 52 ce qui renforce la rigidité du dispositif.

Lorsque l'organe à déplacer est un siège de véhicule ou analogue, un dispositif 1 est monté de chaque côté du siège et les deux dispositifs sont reliés par une barre solidaire des deux tiges de commande 12 de sorte qu'un seul bouton poussoir provoque le déplacement rigoureusement simultané des deux tiges 4. De préférence, la tige 12 est constituée par un tube, comme représentée, et la barre de liaison des deux dispositifs traverse les deux tiges 12 et en est solidaire.

Selon une variante, le bouton poussoir est remplacé par un organe de commande du seul déplacement en translation de la, ou les, tiges 12, par exemple un levier qui est simplement en contact avec l'extrémité de l'une des tiges. Ce levier commande le déverrouillage et permet ainsi à l'utilisateur de faire avancer ou reculer son siège de la distance désirée. Les crémaillères 8 font alors tourner les pignons 10 qui entraînent les tiges 12 et assurent ainsi la synchronisation des déplacements des deux côtés du siège. Le verrouillage est comme précedemment provoqué automatiquement par les ressorts 46.

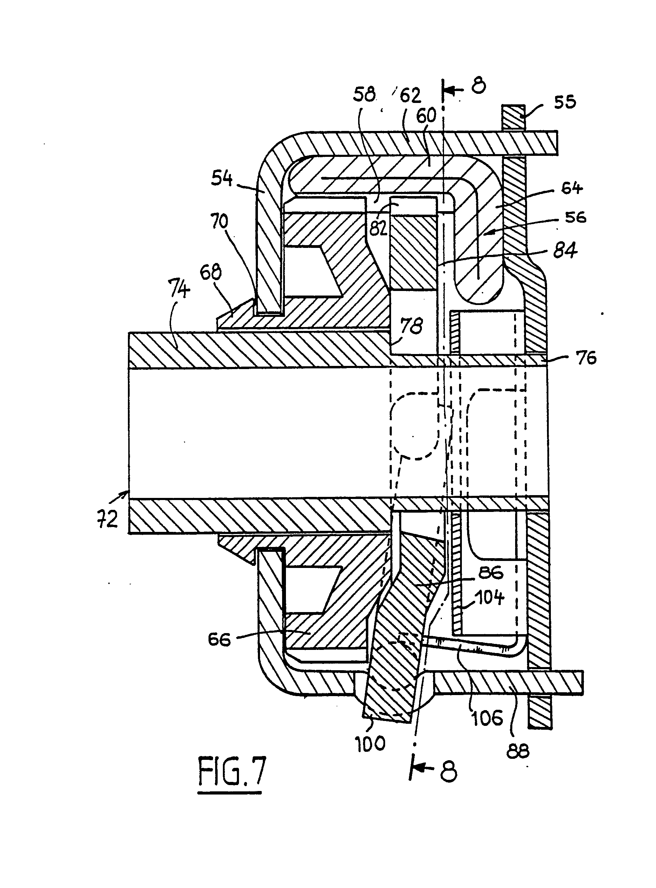

Selon un autre mode de réalisation représenté sur les Figs. 7 à 11, le dispositif de commande 1 comporte un boîtier 54 de section en U qui est fermé par un couvercle 55. La tige 4 est alors prolongé par une portion déformée 56 en forme de L renversé qui traverse le boîtier 54 longitudinalement et comporte sur sa face horizontale interne une crémaillère 58. La branche horizontale 60 de l'aile 56 est en contact avec la face inférieure de la paroi supérieure 62 du boîtier 54 tandis que son aile verticale 64 est en contact avec le couvercle 55, ce qui assure un centrage précis de la partie en L 56 dans le boîtier 54.

La denture 58 est en prise avec un pignon 66 qui comporte un moyeu 68 muni d'une gorge 70 assurant son emboîtement sur la paroi 54, c'est à dire en fait son immobilisation axiale, mais le laissant libre en rotation par rapport au boîtier.

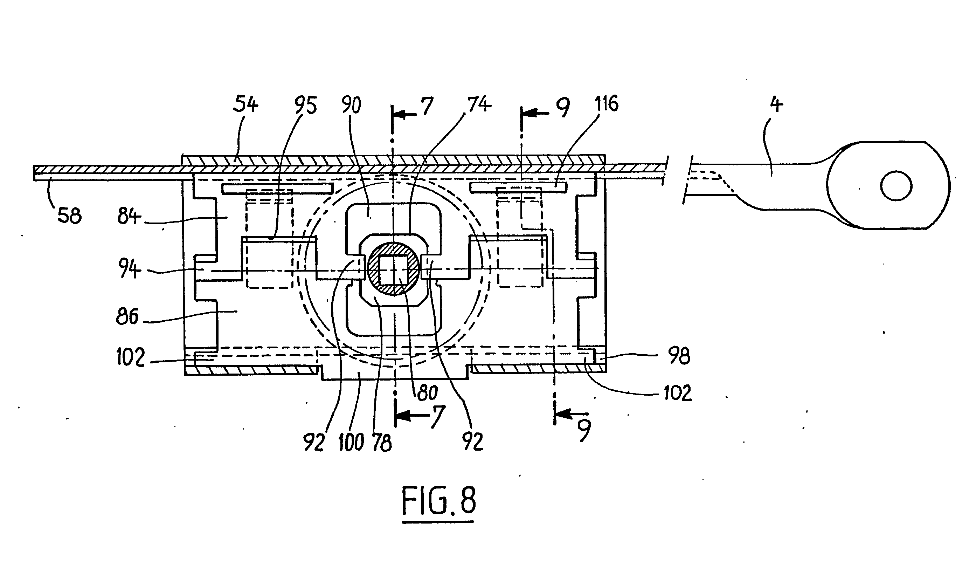

Le moyeu 68 est traversé par une tige de commande 72 dont la surface extérieure comporte plusieurs faces plates, par exemple quatre comme représenté sur la Fig. 8, et est ainsi complémentaire de la surface interne du moyeu 68 de sorte que ces deux organes sont solidaires en rotation seulement.

La tige de commande 72 est étagée et comporte une partie de grand diamètre 74 qui traverse le moyeu 68 et une partie de plus petit diamètre 76 qui traverse le couvercle 55, ces deux parties étant reliées entre elles par un épaulement radial 78. L'ensemble de la tige de commande 72 est ainsi mobile axialement par rapport à l'ensemble du dispositif de commande et peu être reliée d'une part à un bouton poussoir d'actionnement et d'autre part à une tige de liaison avec un autre dispositif de commande analogue, par exemple lorsqu'il s'agit de commander l'inclinaison du dossier d'un siège de véhicule ou autre. Dans ce but la tige de commande 72 comporte de préférence un évidemment axial 80 de section carrée (Fig. 8).

La crémaillère 58 est en outre en prise avec une denture 82 portée par la partie supérieure 84 d'un verrou articulé dont la partie inférieure 86 est bloquée dans une gorge de la paroi inférieure 88 du boîtier 54. De la même manière que l'étrier supérieur 26 du mode de réalisation précédent, la partie supérieure 84 du verrou comporte un évidemment central 90 qui a une dimension nettement supérieure à celle de la partie large 74 de la tige de commande 72 et dans laquelle font saillie deux ergots cylindriques 29 qui sont latéralement en contact avec l'épaulement 78. Le verrou supérieur 84 a toutefois sensiblement la forme d'un peigne car il comporte deux ergots cylindriques extrèmes 94 diregés vers l'extérieur et séparés des ergots 92 par des évidements 95. Ces ergots 94 comme les ergots 92 coopérent avec des surfaces d'appui de forme complémentaire de la partie inférieure 86 du verrou de sorte que ces deux éléments peuvent pivoter l'un par rapport à l'autre de la même manière que les deux étriers 26 et 28 du verrou 18 des Fig. 2 à 5.

La partie inférieure ou pièce d'appui 86 du verrou est comme celle de l'étrier 28 formée par une surface convexe semi-cylindrique 96 logée dans une gorge de forme complémentaire 98. Toutefois la surface convexe 96 est interrompue dans la partie centrale du verrou pour être remplacée par une languette 100 qui traverse une fente de la paroi 88 du boîtier et assure un blocage longitudinal du verrou par rapport à ce dernier. Par ailleurs à chacune des extrémités du verrou la pièce d'appui 86 est prolongée par un ergot cylindrique 102 parallèle à l'ergot correspondant 94 qui est également logé dans la gorge 98.

Comme le montre la Fig. 7 les deux parties 84 et 86 du verrou sont maintenues dans le prolongement l'une de l'autre par un ressort 104 formé par une lame bombée dont les deux extrémités sont fixées sur le couvercle 55 tandis que son sommet vient en appui contre l'articulation du verrou et tend à repousser les ergots 92 contre l'épaulement 78 de la tige de commande 72. A chacune de ses extrémités longitudinales le ressort 104 est en outre prolongé par une patte 106 qui vient en appui sur l'ergot cylindrique 102 correspondant et le serre dans la gorge 98.

Le déverrouillage est obtenu de la même manière que dans le mode de réalisation précédent par un simple déplacement axial de la tige de commande 72 grâce auquel l'épaulement 78 pousse les ergots cylindriques 92 contre l'action du ressort 104 et fait basculer les deux parties 84 et 86 du verrou l'une par rapport à l'autre, ce qui écarte les dents 82 de la partie supérieure 84 de la denture 58 de la crémaillère et permet à cette crémaillère d'être entrainée par la rotation du pignon 66 lors de la rotation de la tige 72.

Le retour en position de verrouillage s'effectue automatiquement lors du déplacement axial en sens inverse de la tige 72 sous l'action du ressort 104 qui a été écrasée par le basculement du verrou.

De ressorts latéraux 110 sont par ailleurs montés sur le fond du boîtier de part et d'autre de la partie centrale du pêne et forment une saillie 111 terminée par un crochet 112 venant en contact avec un bossage 114 de la partie supérieure du verrou 84. Sur sa face opposée à ces bossages le verrou 84 comporte deux rainures longitudinales recevant chacune une garniture 116 en matériau souple qui fait saillie hors de la rainure et vient en contact avec la branche verticale 64 de la tige 56. Les ressorts 112 renforcent ainsi l'action du ressort 104 pour maintenir le verrou 84, 86 en position active, c'est à dire la denture 82 de ce verrou en prise avec la crémaillère 58 mais ils agissent surtout lors du basculement du verrou.

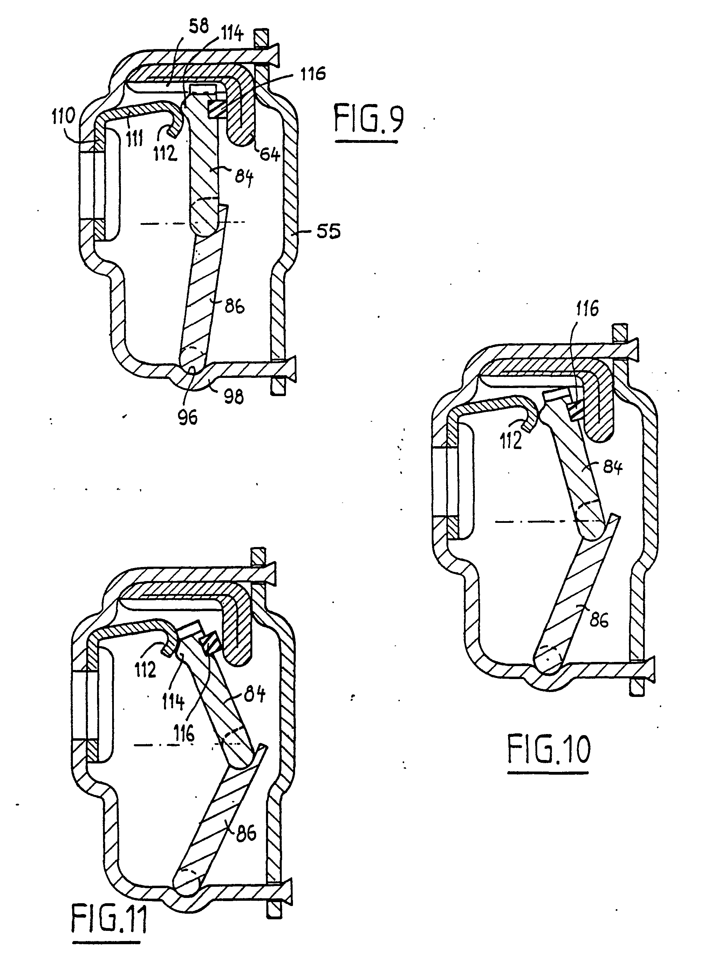

En effet lors du déverrouillage le déplacement axial des ergots cylindriques 92, en faisant basculer la partie supérieure 84 du verrou, déplace le bossage 114 par rapport au crochet 112 de sorte qu'il est repoussé en direction de la branche verticale 64 et que la garniture 116 est écrasée contre cette branche qu'elle applique contre le couvercle 55 du boîtier (Fig. 10) en contrecarrant tout déplacement éventuel de la crémaillère 58 à la manière d'un frein. La poursuite du déplacement axial de la tige de commande 72 permet toutefois aux bossages 114 de franchir le crochet 112 et ainsi aux garnitures 116 de se dégager de la branche 64. La tige coulissante 56 et par suite la crémaillère 58 sont libres de se déplacer à l'intérieur du boîtier 54, par exemple sous l'action du pignon 66 et de la rotation de la tige de commande 72.

Une fois la position désirée obtenue, le mouvement en sens inverse de la tige de commande 72 fait passer les deux parties 84, 86 du verrou articulé de la position représentée sur la Fig. 11 à la position représentée sur la Fig. 10, c'est à dire oblige à nouveau les bossages 114 à franchir le crochet 112 et les garnitures 116 à s'opposer au déplacement de la crémaillère 58 dans le boîtier 54, avant que la denture 82 du verrou ne re-vienne en prise avec la crémaillère 58.

La souplesse de la garniture 116 est toutefois suffisante pour permettre un très léger déplacement relatif entre la denture et la crémaillère et assurer ainsi un engagement réèl de ces deux éléments.

Dans tous les cas la commande de l'organe à déplacer peut ainsi être effectuée de manière simple à partir du point le plus approprié et cela grâce à un dispositif de commande qui peut être monté dès la construction, notamment celle d'un siège de véhicule, ou ultérieurement sans obliger à des modifications importantes de l'ensemble.

## Revendications

1. Dispositif de commande du déplacement pas à pas d'un organe et notamment du dossier d'un siège de véhicule, caractérisé en ce qu'il comporte un boîtier (14) solidaire d'un point fixe et traversé en son centre par une tige de commande (12) qui est solidaire, en rotation seulement, d'un pignon (10) en prise avec une crémaillère (8) reliée à l'organe à déplacer, et qui est en contact avec un verrou articulé (18) formé par deux pièces (26, 28) reliées par une articulation, dont les deux pièces (26, 28) sont, à l'opposé de l'articulation, l'une munie d'une denture (20) de coopération avec la crémaillère et l'autre reçue dans une gorge de retenue (24) ménagée dans le boîtier, ce verrou étant repoussé en position repliée de déverrouillage par un déplacement axial de la tige de commande (12) et rappelé élastiquement en position verrouillée dès le retour de cette tige de commande à sa position de repos.

2. Dispositif suivant la revendication 1, caractérisé en ce que le verrou articulé (18) est formé par deux étriers (26, 28) montés en sens inverse autour de l'organe de commande (12), et en appui l'un sur l'autre par deux faces incurvées de forme complémentaire (30, 32).

3. Dispositif suivant l'une des revendications 1 et 2, caractérisé en ce que le verrou articulé est évidé dans sa partie centrale et comporte deux ergots internes (34) qui coopèrent avec un épaulement extérieur (36) de l'organe de commande en vue du repli du verrou en position de déverrouillage.

4. Dispositif suivant l'une des revendications précédentes, caractérisé en ce que le boîtier (14) forme une gorge interne inférieure (24) de réception de la partie inférieure semi-cylindrique (22) du verrou (18).

5. Dispositif suivant l'une des revendications précédentes caractérisé en ce que le boîtier (14) est recourbé à sa partie supérieure pour former un rail de guidage (16) pénétrant dans une rainure longitudinale (17) d'une tige (6) portant la crémaillère (8).

6. Dispositif suivant la revendication 5, caractérisé en ce que la tige (6) portant la crémaillère à une section en U à double paroi délimitant une rainure longitudinale de guidage.

7. Dispositif suivant l'une des revendications précédentes, caractérisé en ce qu'il comporte un ressort de rappel (46) formé par une lame fixée à sa partie inférieure (48) sur le boîtier et à sa partie supérieure (50) sur la face opposée du verrou, au voisinage de la denture rectiligne (20) de celui-ci.

8. Dispositif suivant l'une des revendications 2 à 7, caractérisé en ce qu'il comporte un ressort de rappel (46) fixé entre chacune des branches de l'étrier supérieur (26) et le boîtier (14).

9. Dispositif suivant l'une des revendications 1 à 4, caractérisé en ce que le boîtier est traversé par une tige (56) en forme de L renversé, qui coulisse contre le boîtier (54) et contre son couvercle (55) et dont la branche (60) en appui contre le boîtier porte la crémaillère (58).

10. Dispositif suivant la revendication 9, caractérisé en ce que les pieces formant les parties supérieure (84) et inférieure (86) du verrou articulé sont prolongés latéralement par des ergots (94) et ont en regard l'un de l'autre des formes de freignes complémentaires.

11. Dispositif suivant la revendication 10, caractérisé en ce que la partie inférieure (86) du verrou comporte dans sa partie centrale une languette de centrage (100) qui traverse une ouverture de boîtier (54).

12. Dispositif suivant l'une des revendications 9 à 11, caractérisé en ce qu'il comporte, d'un côté du verrou, un ressort de rappel (104) et, de l'autre côté, au moins un ressort (111), fixé dans le boîtier (54) et terminé par un crochet (112) de coopération avec un bossage (114) de la partie supérieure du verrou, qui renforce l'action du ressort de rappel.

13. Dispositif suivant la revendication 12, caractérisé en ce que la partie supérieure (84) du verrou comporte sur sa face opposée au bossage (114) un organe élastique (116) de freinage de la tige (56) portant la crémaillère sous l'action du ou des ressorts (111, 112), lorsque la denture (82) du verrou se trouve à proximité de celle de le crémaillère, dans une position intermédiaire entre la position de verrouillage et la position de déverrouillage.

14. Dispositif suivant l'une des revendications précédentes, caractérisé en ce que la tige de commande (12) est reliée à un bouton poussoir qui lui est solidaire axialement et en rotation.

15. Dispositif suivant l'une des revendications 1 à 8, caractérisé en ce que la tige de commande (12) est associée à un levier de déverrouillage provoquant son déplacement axial.

16. Dispositif suivant l'une des revendications 1 à 10, caractérisé en ce que le boîtier étant solidaire de l'assise du siège et la crémaillère étant articulée sur le dossier, la tige de commande (12) est solidaire d'une barre de liaison à la tige de commande d'un second dispositif semblable monté de l'autre côté du siège et assure ainsi la synchronisation des déplacements des deux côtés de ce dernier.

## Patentansprüche

1. Antriebsvorrichtung zum schrittweisen Verstellen eines Teiles, insbesondere der Rückenlehne eines Fahrzeugsitzes, dadurch gekennzeichnet, daß sie ein Gehäuse (14) solidarisch mit einem Festpunkt und in seinem Zentrum von einem Antriebszapfen (12) durchquert aufweist, der nur im Drehen einteilig mit einem Zahnritzel (10) ist, das im Eingriff mit einer Zahnstange (8) steht, und der in Berührung mit einem Gelenkschloß (18) ist, das aus zwei durch ein Gelenk verbundenen Teilen (26, 28) gebildet wird, von denen das eine der beiden im Gelenk entgegengesetzt gerichteten Teile (26, 28) mit einer Verzahnung (20) zum Zusammenwirken mit der Zahnstange ausgestattet und das andere in einer Rückhaltenut (24) aufgenommen ist, die im Gehäuse vorgesehen ist, wobei dieses Schloß in die gefaltete Entriegelungsstellung durch ein axiales Versetzen des Antriebszapfens (12) gestoßen und bei der Rückkehr dieses Antriebszapfens in seine Ruhestellung elastisch in Verriegelungsstellung rückgestellt wird.

2. Vorrichtung nach Anspruch 1, dadurch gekennzeichnet, daß das Gelenkschloß (18) durch zwei Bügel (26, 28) gebildet wird, die im reziproken Sinn um den Antriebszapfen (12) herum angebracht sind und sich mit sich ergänzenden gekrümmten Oberflächen (30, 32) aneinander abstützen.

3. Vorrichtung nach Anspruch 1 oder 2, dadurch gekennzeichnet, daß das Gelenkschloß in seinem mittleren Abschnitt ausgespart ist und zwei nach innen gerichtete Vorsprünge (34) aufweist, die mit einer äußeren Schulter (36) des Antriebsteils im Hinblick auf das Falten des Schlosses in Entriegelungsstellung zusammenwirken.

4. Vorrichtung nach einem der vorstehenden Ansprüche, dadurch gekennzeichnet, daß das Gehäuse (14) eine innere untere Nut (24) zur Aufnahme des unteren halbzylindrischen Abschnitts (22) des Schlosses (18) aufweist.

5. Vorrichtung nach einem der vorstehenden Ansprüche, dadurch gekennzeichnet, daß das Gehäuse (14) an seinem oberen Abschnitt gebogen ist, um eine Führungsschiene (16) zu bilden, die in eine Längsnut (17) eines Schaftes (6) eindringt, welcher die Zahnstange (8) trägt.

6. Vorrichtung nach Anspruch 5, dadurch gekennzeichnet, daß der die Zahnstange tragende Schaft (6) einen Abschnitt in U-Form mit einer Doppelwandung aufweist, die die Führungs-Längsnut begreznt.

7. Vorrichtung nach einem der vorstehenden Ansprüche, dadurch gekennzeichnet, daß sie eine Rückstellfeder (46) auf einer Lamelle aufweist, die mit ihrem unteren Abschnitt (48) am Gehäuse und mit ihrem oberen Abschnitt (50) an der entgegengesetzten Oberfläche des Schlosses nahe von dessen geradliniger Verzahnung (20) befestigt ist.

8. Vorrichtung nach einem der Ansprüche 2 bis 7, dadurch gekennzeichnet, daß sie eine Rückstellfeder (46) aufweist, die zwischen jedem der Arme des oberen Bügels (26) und dem Gehäuse (14) fest angebracht ist.

9. Vorrichtung nach einem der Ansprüche 1 bis 4, dadurch gekennzeichnet, daß das Gehäuse von einem Schaft (56) in Form eines umgekehrten liegenden L durchquert wird, der gegenüber dem Gehäuse (54) und gegenüber seiner Abdeckung (55) verschiebbar ist und dessen Arm (60) unter Abstützung am Gehäuse die Zahnstange (58) trägt.

10. Vorrichtung nach Anspruch 9, dadurch gekennzeichnet, daß die oberen (84) und die unteren (86) Abschnitte des Gelenkschlosses bildenden Teile in ihrer Breite durch Vorsprünge (94) verlängert sind und im Hinblick zueinander passende Kammformen haben.

11. Vorrichtung nach Anspruch 10, dadurch gekennzeichnet, daß der untere Abschnitt (86) des Schlosses in seinem mittleren Abschnitt eine Zentrierlasche (100) aufweist, die eine Öffnung des Gehäuses (54) durchquert.

12. Vorrichtung nach einem der Ansprüche 9 bis 11, dadurch gekennzeichnet, daß sie an der einen Seite des Schlosses eine Rückholfeder (104) und an der anderen Seite wenigstens eine Feder (111) aufweist, die im Gehäuse (54) befestigt ist und in einem Haken zur Zusammenarbeit mit einem Höcker (114) am oberen Abschnitt des Schlosses endet, die die Wirkung der Rückholfeder verstärkt.

13. Vorrichtung nach Anspruch 12, dadurch gekennzeichnet, daß der obere Abschnitt (84) des Schlosses an seiner dem Höcker (114) entgegengesetzten Fläche ein elastisches Bremsteil (116) für den Schaft (56) aufweist, der die Zahnstange unter Betätigung der einen mder mehrerer Federn (111, 112) trägt, wenn die Verzahnung (82) des Schlosses sich in der Nähe derjenigen der Zahnstange in einer Zwischenstellung zwischen der Verriegelungs- und der Entriegelungsstellung befindet.

14. Vorrichtung nach einem der vorstehenden Ansprüche, dadurch gekennzeichnet, daß der Antriebszapfen (12) mit einem Druckkopf verbunden ist, der mit ihm axial und beim Drehen solidarisch ist.

15. Vorrichtung nach einem der Ansprüche 1 bis 8, daß der Antriebszapfen (12) mit einem Entriegelungshebel vereint ist, der sein axiales Versetzen veranlaßt.

16. Vorrichtung nach einem der Ansprüche 1 bis 10, dadurch gekennzeichnet, daß das Gehäuse einteilig mit der Grundplatte des Sitzes und die Zahnstange gelenkig an der Rückenlehne angebracht ist, der Antriebszapfen (12) einteilig mit einer Lasche am Antriebszapfen einer zweiten gleichartigen, auf der anderen Seite des Sitzes angebrachten Vorrichtung ist und so die Gleichzeitigkeit im Versetzen der beiden Seiten des Sitzes sicherstellt.

**Claims**

1. Device for controlling the step-by-step displacement of a movable element, more particularly a vehicle seat back, characterized in that it comprises a housing (14) connected to a fixed point or element and centrally traversed by a control member (12), which is integral solely in rotation with a pinion (10) engaging with a rack (8) connected to the member to be displaced and which is in contact with an articulated bolt (18) formed by two parts (26, 28) interconnected by an articulation, whereof the two parts (26, 28) are, opposite to the articulation, in one case provided with a set of teeth (20) cooperating with the rack and in other case received in a retaining groove (24) formed in the housing, said bolt being urged into the folded up, unlocking position by an axial displacement of the control member (12) and is elastically returned to the locking position as soon as said control member returns to its position of rest.

2. Device according to Claim 1, characterized in that the articulated bolt (18) is formed by two yokes (26, 28) mounted in reverse directions around the control member (12) and which bear on one another by two inwardly curved faces (30, 32) having a complimentary shape.

3. Device according to one of the Claims 1 and 2, characterized in that the articulated bolt is recessed in its central portion and has two inner lugs (34) cooperating with an outer shoulder (36) of the control member in order to fold up the bolt in the unlocking position.

4. Device according to one of the preceding Claims, characterized in that the housing (14) forms an inner, lower groove (24) for receiving the lower, semicylindrical portion (22) of the bolt (18).

5. Device according to one of the preceding Claims, characterized in that the housing (14) is curved in its upper portion so as to form a guide rail (16) penetrating a longitudinal groove (17) of a rod (6) carrying the rack (8).

6. Device according to Claim 5, characterized in that the rod (6) carrying the rack has a double walled, U-shaped cross-section defining a longitudinal, guide groove.

7. Device according to one of the preceding Claims, characterized in that it has a return spring (46) formed by a strip fixed in a lower portion (48) to the housing and in the upper portion (50) to the opposite face of the bolt, in the vicinity of the rectilinear tooth system (20) of the latter.

8. Device according to one of the Claims 2 to 7, characterized in that it has a return spring (46) fixed between each of the branches of the upper yoke (26) and the housing (14).

9. Device according to one of the Claims 1 to 4, characterized in that the housing is traversed by an inverted L-shaped rod (56), which slides against the housing (54) and against its cover (55) and whose branch (60) bears against the housing and carries the rack (58).

10. Device according to Claim 9, characterized in that the parts forming the upper (84) and lower (86) portions of the articulated bolt are laterally extended by lugs (94) and have complimentary comb shapes facing one another.

11. Device according to Claim 10, characterized in that the lower portion (86) of the bolt has in its central part a centring tongue (100) traversing an opening in the housing (54).

12. Device according to one of the Claims 9 to 11, characterized in that it has on one side of the bolt a return spring (104) and on the other side at least one spring (111) fixed in the housing (54) and terminated by a hook (112) cooperating with a boss (114) in the upper portion of the bolt and which reinforces the action of the return spring.

13. Device according to Claim 12, characterized in that the upper portion (84) of the bolt has on its face opposite to the boss (114), an elastic member (116) for decelerating the rod (56) carrying the rack under the action of the spring or springs (111, 112), when the tooth system (82) of the bolt is in the vicinity of that of the rack, in an intermediate position between the locking position and the unlocking position.

14. Device according to one of the preceding Claims, characterized in that the control member (12) is connected to a push knob axially and rotationally integral therewith.

15. Device according to one of the Claims 1 to 8, characterized in that the control member (12) is associated with an unlocking lever bringing about its axial displacement.

16. Device according to one of the Claims 1 to 10, characterized in that as the housing is integral with the seat structure of the seat and the rack is articulated to the back, the control member (12) is integral with a bar for connecting to the control member of a second similar device mounted on the other side of the seat, so as to ensure the synchronization of the displacements of the two sides of the latter.

FIG.1

FIG.2

FIG.3

EP 0 245 131 B1

## FIG.4

14 — 6

50

26

46 — 40

28

48 — 22

## FIG.5

39

37

20

26

30

32

18

28 — 22

3

34

## FIG.6

16

6

8

52

40

2

FIG.7

FIG.8

FIG.9

FIG.10

FIG.11